# EUROPÄISCHE PATENTANMELDUNG

(11) **EP 1 154 616 A2**
(43) Veröffentlichungstag der Anmeldung: **14.11.2001**
(21) Anmeldenummer: 01110773.7
(22) Anmeldetag: 03.05.2001
(51) Int. Cl.: H04M 1/02, H04M 1/18, H04M 1/23

(54) **Mobiltelefon mit einem Tastaturfeld**

(30) Priorität: 10.05.2000 DE 10022707
(71) Anmelder: SIEMENS AKTIENGESELLSCHAFT, 80333 München (DE)
(72) Erfinder: Beeker, Udo, 46509 Xanten (DE); Kremers, Arndt, 52066 Aachen (DE); Voigt, Christian, 46509 Xanten (DE)

(57) **Zusammenfassung**

Die Erfindung betrifft ein Mobiltelefon mit einem Tastaturfeld, welches durch eine Öffnung in der Gehäuseoberschale von außen bedienbar ist.

Zur Abdichtung des Tastaturfeldes besitzt die Gehäuseoberschale (1) eine Dichtrippe (4) und die Tastaturmatte (2) weist als Gegenstück zu dieser Dichtrippe (4) eine Nut (5), auf deren Boden sich eine in Längsrichtung der Nut (5) verlaufende Dichtlippe (6) befindet, auf, wobei sich unter dem Boden der Nut (5) ein in Längsrichtung der Nut (5) verlaufender Hohlraum (7) befindet.

## Beschreibung

Die vorliegende Erfindung betrifft ein Mobiltelefon mit einem Tastaturfeld, welches durch eine Öffnung in der Gehäuseoberschale von außen bedienbar ist.

Moderne Mobiltelefone werden nicht nur im Büro, im Auto und auf der Strasse, sondern in zunehmendem Maße auch während unterschiedlichster Freizeitaktivitäten benutzt, bei denen die Gefahr besteht, dass Festkörper, Staub und Feuchtigkeit in die Geräte eindringen können.

Ziel der Mobiltelefon-Entwicklung ist es daher, Mobiltelefone zu entwickeln, welche einer IP-Schutzklasse zugeordnet werden können. Die IP(= International Protection)-Schutzklasse klassifiziert die Systeme entsprechend ihres Schutzgrades gegen das Eindringen von Festkörpern, Staub und Feuchtigkeit. Die IP-Bezeichnung besteht aus zwei Ziffern, wobei die erste Ziffer den Schutzgrad gegen Staub und die zweite Ziffer den Schutzgrad gegen Feuchtigkeit angibt. Die erste Ziffer kann von 0 bis 6 und die zweite Ziffer von 0 bis 8 variieren. Dabei entspricht die Ziffer 0 keinem Schutzgrad. Zum Beispiel bedeutet eine 5 als erste Ziffer, dass das Gerät gegen Staub geschützt ist, und eine 6 als erste Ziffer bedeutet, dass das Gerät vollkommen staubdicht ist. Eine 4 als zweite Ziffer besagt, dass das Gerät gegen Spritzwasser geschützt ist, während zum Beispiel eine 5 als zweite Ziffer aussagt, dass das Gerät gegen einen Wasserstrahl geschützt ist.

Bei dem oben angegebenen Mobiltelefon muss eine Abdichtung zwischen dem Tastaturfeld und der Gehäuseoberschale erfolgen, d.h. in dem Bereich, in welchem das Tastaturfeld und die Gehäuseoberschale miteinander in Verbindung stehen.

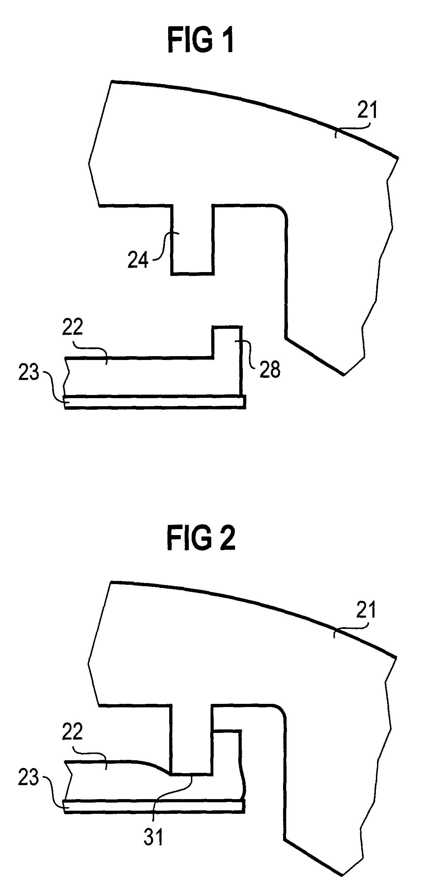

Die Figuren 1 und 2 zeigen eine bekannte Art der Abdichtung zwischen einem Tastaturfeld und der entsprechenden Gehäuseoberschale. Dabei weist die Oberschale 21 eine rechteckförmige Dichtrippe 24 auf, während das Tastaturfeld, bzw. die Tastaturmatte 22 in ihrem Randbereich einen Steg 28 aufweist. Die Tastaturmatte 22 befindet sich auf einer Leiterplatte 23. Im zusammengebauten Zustand wird eine Abdichtung des Tastaturfeldes dadurch erreicht, dass die integrierte Dichtrippe 24 parallel zu dem Steg 28 in die aus Silikon oder einem ähnlichen Material bestehende Tastaturmatte 22 zur Bildung eines Dichtbereichs 31 mit Hilfe sehr hoher Kräfte eingedrückt wird.

Aufgabe der vorliegenden Erfindung ist es, ein Mobiltelefon mit einem Tastaturfeld, welches durch eine Öffnung in der Gehäuseoberschale von außen bedienbar ist, anzugeben, bei welchem für die Abdichtung zwischen dem Tastaturfeld und der Gehäuseoberschale eine hohe Schutzklasse erreicht wird, gleichzeitig aber nur geringe definierte Kräfte in Verschlussrichtung aufgebracht werden müssen.

Diese Aufgabe wird erfindungsgemäß für das eingangs genannte Mobiltelefon dadurch gelöst, dass die Gehäuseoberschale eine Dichtrippe und die Tastaturmatte als Gegenstück zu dieser Dichtrippe eine Nut, auf deren Boden sich eine in Längsrichtung der Nut verlaufende Dichtlippe befindet, aufweist, wobei sich unter dem Boden der Nut ein in Längsrichtung der Nut verlaufender Hohlraum befindet.

Bei dem erfindungsgemäßen Mobiltelefon wird für die Abdichtung zwischen dem Tastaturfeld und der Gehäuseoberschale eine hohe Schutzklasse erreicht und gleichzeitig werden aber beim Zusammenbau nur geringe definierte Kräfte in Verschlussrichtung benötigt.

Eine zweckmäßige Weierbildung des erfindungsgemäßen Mobiltelefons ist dadurch gekennzeichnet, dass die Tastaturmatte im Randbereich durch einen Steg begrenzt ist, welcher im oberen Randbereich eine innen liegende schräg verlaufende Phase aufweist, und dass als Gegenstück zu der Phase an der Gehäuseoberschale ein Absatz, welcher an der äusseren Verbindungskante zwischen Dichtrippe und der Unterseite der Oberschale angeordnet ist, vorgesehen ist.

Mit Hilfe dieser Weiterbildung wird ein noch höherer Schutzgrad erreicht.

Weitere zweckmäßige Weiterbildungen und Ausgestaltungen der Erfindung ergeben sich aus den Unteransprüchen, sowie aus der nachfolgenden Beschreibung eines Ausführungsbeispiels anhand der Zeichnung.

Es zeigen
- Figur 1: eine teilweise geschnittene Querschnittsansicht einer herkömmlichen Abdichtung zwischen Tastaturfeld und Gehäuseoberschale vor dem Zusammenbau,
- Figur 2: eine teilweise geschnittene Querschnittsansicht einer herkömmlichen Abdichtung zwischen Tastaturfeld und Gehäuseoberschale nach FIG 1 im zusammengebauten Zustand,
- Figur 3: eine teilweise geschnittene Querschnittsansicht einer Abdichtung zwischen Tastaturfeld und Gehäuseoberschale gemäß der vorliegenden Erfindung vor dem Zusammenbau,
- Figur 4: eine teilweise geschnittene Querschnittsansicht einer Abdichtung zwischen Tastaturfeld und Gehäuseoberschale gemäß der vorliegenden Erfindung nach FIG 3 im zusammengebauten Zustand,

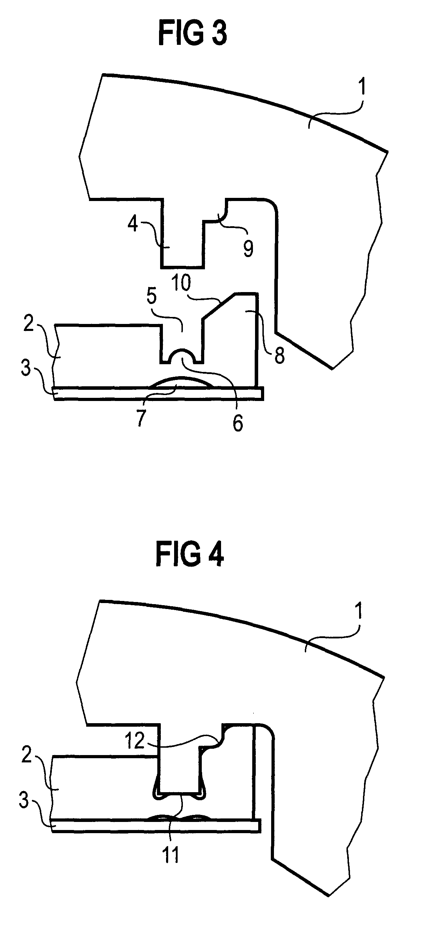

In den Figuren 3 und 4 ist die Abdichtung eines Tastaturfelds zu einer Gehäuseoberschale bei einem Mobiltelefon gemäß der vorliegenden Erfindung dargestellt.

Die Gehäuseoberschale 1 weist eine Dichtrippe 4 auf. Als Gegenstück zu dieser Dichtrippe 4 ist in der Tastaturmatte 2 eine Nut 5 vorgesehen, an deren Boden sich eine entlang der Nut 5 verlaufende halbkreisförmige Dichtlippe 6 befindet. Unter dem Boden der Nut 5 befindet sich ein ebenfalls umlaufender Hohlraum 7, wodurch die beim Zusammenfügen von Oberschale 1 und Tastaturmatte 2 notwendigen Dichtkräfte reduziert werden. Auf diese Weise wird auf dem Boden der Nut 5 ein erster Dichtbereich 11 ausgebildet.

Die Tastaturmatte 2 wird an ihren Rändern durch einen Steg 8 begrenzt. Dieser Steg 8 weist in seinem oberen Randbereich eine innen liegende schräg verlaufende Phase 10 auf.

Als Gegenstück zu dieser Phase 10 ist an der Gehäuseoberschale 1 ein Absatz 9, welcher an der äusseren Verbindungskante zwischen Dichtrippe 4 und der Unterseite der Oberschale 1 angeordnet ist, vorgesehen. Im zusammengefügten Zustand bilden der Absatz 9 und die Phase 10 zusammen einen zweiten Dichtbereich 12.

## Patentansprüche

1. Mobiltelefon mit einem Tastaturfeld, welches durch eine Öffnung in der Gehäuseoberschale von außen bedienbar ist,
**dadurch gekennzeichnet,**
**dass** die Gehäuseoberschale (1) eine Dichtrippe (4) und die Tastaturmatte (2) als Gegenstück zu dieser Dichtrippe (4) eine Nut (5), auf deren Boden sich eine in Längsrichtung der Nut (5) verlaufende Dichtlippe (6) befindet, aufweist, wobei sich unter dem Boden der Nut (5) ein in Längsrichtung der Nut (5) verlaufender Hohlraum (7) befindet.

2. Mobiltelefon nach Anspruch 1,
**dadurch gekennzeichnet,**
**dass** die Tastaturmatte (2) im Randbereich durch einen Steg (8) begrenzt ist, welcher im oberen Randbereich eine innen liegende schräg verlaufende Phase (10) aufweist, und
**dass** als Gegenstück zu der Phase (10) an der Gehäuseoberschale ein Absatz (9), welcher an der äusseren Verbindungskante zwischen Dichtrippe (4) und der Unterseite der Oberschale (1) angeordnet ist, vorgesehen ist.

3. Mobiltelefon nach Anspruch 1 oder 2,
**dadurch gekennzeichnet,**
**dass** die Dichtlippe (6) im Wesentlichen einen halbkreisförmigen Querschnitt aufweist.

4. Mobiltelefon nach Anspruch 2 oder 3,
**dadurch gekennzeichnet,**
**dass** der Absatz (9) im Wesentlichen halbkreisförmig ausgebildet ist.
